Europäisches Patentamt

European Patent Office

Office européen des brevets

(11) Veröffentlichungsnummer : **0 205 803**
**B1**

(12)

# EUROPÄISCHE PATENTSCHRIFT

(45) Veröffentlichungstag der Patentschrift :
**17.08.88**

(21) Anmeldenummer : **86105439.3**

(22) Anmeldetag : **19.04.86**

(51) Int. Cl.⁴ : **B 67 B 3/20**, F 16 D 47/04,
F 16 D 3/74

(54) **Vorrichtung zum Anbringen eines Schraubverschlusses an einem Behälter.**

(30) Priorität : **22.05.85 DE 3518338**

(43) Veröffentlichungstag der Anmeldung :
**30.12.86 Patentblatt 86/52**

(45) Bekanntmachung des Hinweises auf die Patenterteilung : **17.08.88 Patentblatt 88/33**

(84) Benannte Vertragsstaaten :
**DE FR GB IT**

(56) Entgegenhaltungen :
**FR-A- 2 067 494**
**GB-A- 2 129 409**
**US-A- 2 409 385**
**US-A- 2 513 460**
**US-A- 3 905 208**

(73) Patentinhaber : **ROBERT BOSCH GMBH**
**Postfach 50**
**D-7000 Stuttgart 1 (DE)**

(72) Erfinder : **Bethge, Gerhard, Dipl.-Ing.**
**Christian-Gau-Strasse 46**
**D-5000 Köln 41 (DE)**
Erfinder : **Schmitz, Albert, Ing. grad.**
**Grunderweg 10**
**D-5067 Kürten-Eichhof (DE)**

## Beschreibung

### Stand der Technik

Die Erfindung geht aus von einer Vorrichtung zum Anbringen eines Schraubverschlusses an einem Behälter nach der Gattung des Hauptanspruchs. Bei einer beispielsweise durch die DE-OS 33 36 041 bekannt gewordenen Vorrichtung dieser Art ist in dem Schraubkopf eine Rutschkupplung angeordnet, die beim Überschreiten eines bestimmten Verschluß-Aufschraubdrehmoments die Drehverbindung zum Antriebsmotor löst. Zusätzlich hat die bekannte Vorrichtung Detektoren zum Ermitteln der Drehgeschwindigkeit und des dem Antriebsmotor zugeführten Stromes sowie zum Messen des aufgebrachten Drehmoments. Eine solche Vorrichtung ist aufwendig und im rauhen Betrieb von Abfüllanlagen störungsanfällig.

### Vorteile der Erfindung

Die Vorrichtung zum Anbringen eines Schraubverschlusses an einem Behälter mit den kennzeichnenden Merkmalen des Hauptanspruchs hat demgegenüber den Vorteil eines einfachen und bei rauhem Einsatz haltbaren Aufbaus. Ferner lassen sich mit ihr Schraubverschlüsse für Flaschen, Kanister und dgl. Behälter, bei denen der Drehwinkel vom Beginn des Festziehens bis zum Stillstand des ·Verschlusses sehr klein und die dafür zur Verfügung stehende Zeit sehr kurz ist, gleichmäßig fest anziehen. Die nachgiebige und daher drehweiche Torsionskupplung wandelt den sonst üblichen « harten Schraubfall » durch Vergrößern des Drehwinkels in einen « weichen Schraubfall » um, der ein sicheres Festdrehen des Verschlusses gewährleistet. Die Rücklaufsperre verhindert ein Lösen des Verschlusses, wenn nach Abschalten des Antriebsmotors die in der nachgiebigen Torsionskupplung gespeicherte Energie die Drehmassen rückwärts dreht.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist die Ausbildung der Torsionskupplung als Torsionsfeder, insbesondere einer solchen aus einem nachgiebigen Elastomeren, beispielsweise Polyurethan. Vorzugsweise hat die Torsionsfeder die Form eines Rohres, dessen beiden Enden auf konischen Zapfen aufgespannt sind.

### Zeichnung

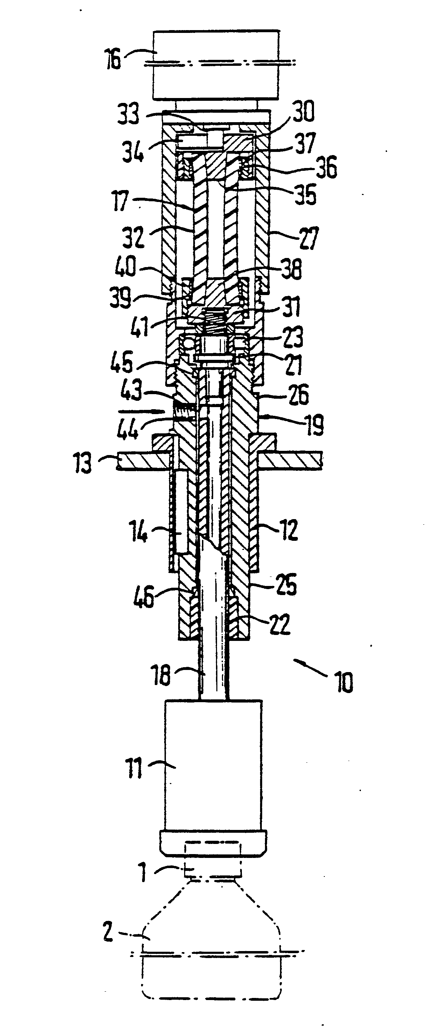

Ein Ausführungsbeispiel der Erfindung ist in der Zeichnung dargestellt, die eine Vorrichtung zum Aufschrauben von Verschlüssen auf Behälter im Schnitt zeigt, und wird in der nachfolgenden Beschreibung näher erläutert.

### Beschreibung des Ausführungsbeispiels

Eine Behälterschließmaschine hat eine oder vorzugsweise mehrere Schraubeinheiten 10 mit einem Schraubkopf 11 zum Erfassen von kappenförmigen Schraubverschlüssen 1 und zum Aufschrauben solcher Verschlüsse auf gefüllte Behälter, beispielsweise Flaschen 2. Die senkrecht ausgerichtete Schraubeinheit 10 sitzt axial verschiebbar in einer Bundhülse 12 eines heb- und senkbaren Armes 13 und ist gegen Verdrehen durch eine Paßfeder 14 gesichert. Durch Absenken des Armes 13 wird die Schraubeinheit 10 mit einem zuvor von ihrem Schraubkopf 11 übernommenen Schraubverschluß 1 auf eine gefüllte Flasche 2 zubewegt. Der an sich bekannte Schraubkopf 11 wird zum Erfassen eines Schraubverschlusses 1 mit Druckluft betätigt.

Die Schraubeinheit 10 umfaßt neben dem Schraubkopf 11 einen Antriebsmotor 16, eine diesen mit dem Schraubkopf 11 verbindende Kupplung 17 und eine Spindel 18 sowie ein hülsenförmiges, mehrteiliges Gehäuse 19. In dem in die Bundhülse 12 eingesetzten Gehäuse 19 sind die Spindel 18 und die Kupplung 17 drehbar gelagert. Die den Schraubkopf 11 an ihrem unteren Ende tragende Spindel 18 ist zum Durchführen von Druckluft zum Schraubkopf 11 hohl ausgebildet und an ihrem oberen Ende mit einem abgesetzten Wellenstück 21 verschlossen. Sie ist unten in einem Gleitlager 22 und oben mit dem drehfest verbundenen Wellenstück 21 in einem Rücklaufsperre-Wälzlager 23 drehbar gelagert. Das kombinierte Rücklaufsperre-Wälzlager ist sowohl ein Drehlager als auch ein Freilauf oder eine Einwegkupplung an sich bekannter Art und läßt ein Umlaufen der Spindel 18 nur in einer Richtung zu und sperrt in der anderen Drehrichtung, die der Aufschraubdrehrichtung entgegengesetzt ist. Das Gehäuse 19 ist aus drei Teilen zusammengeschraubt, von denen die untere Gehäusehülse 25 das Gleitlager 22 und die mittlere Gehäusehülse 26 das Rücklaufsperre-Wälzlager 23 aufnehmen sowie die obere Gehäusehülse 27 die Kupplung 17 umgibt und den Antriebsmotor 16 trägt.

Die Kupplung 17 ist eine Torsionsfeder in Form eines Rohrstücks 32 mit ringförmigem Querschnitt aus einem nachgiebigen Elastomeren, beispielsweise Polyurethan, dessen Enden in Spannköpfen 30, 31 befestigt sind. Der obere Spannkopf 30 ist mit einem Spannteil 34 mit der Antriebswelle 33 des Antriebsmotors 16 drehfest verbunden. Er hat einen nach unten axial vorstehenden konischen Zapfen 35, auf den das obere Ende des Rohrstücks 32 aufgeweitet aufgezogen ist und von einer konischen Spannhülse 36 festgeklemmt wird, die von einem in den Schraubkopf 30 eingeschraubten Schraubring 37 gehalten wird. Das untere Ende des Rohrstücks 32 sitzt ebenfalls auf einem konischen Zapfen 38, der am anderen Spannkopf 31 nach oben axial vorsteht. Es wird am Zapfen 38 von einer Spannhülse 39 festgeklemmt, die von einem auf den Spannkopf 31 aufgeschraubten Schraubring 40 gehalten wird. Der andere Spannkopf 31 ist drehfest auf einem Gewindezapfen 41 des auf der Spindel 18 befestigten Wellenstücks 21 aufgeschraubt.

Zum Zuführen von Druckluft zum Schraubkopf 11 durch die Spindel 18 hat diese eine Radialbohrung 43 und die untere Gehäusehülse 25 eine Bohrung 44. Der Radialspalt zwischen dem Innern der unteren Gehäusehülse 25 und der Spindel 18 ist durch Dichtungen 45, 46 abgedichtet.

Der Antriebsmotor 16 ist vorzugsweise ein Elektromotor mit einem Untersetzungsgetriebe, der beim Überschreiten eines bestimmten Drehmoments, oder bei Aufnahme einer bestimmten Stromstärke selbsttätig abschaltet.

Die oben beschriebene Vorrichtung wirkt wie folgt : Zunächst wird in den Schraubkopf 11 ein Schraubverschluß 1 eingesetzt und darauf eine gefüllte Flasche 2 unter die Schraubeinheit 10 mit dem Schraubkopf 11 gebracht. Beim axialen Zusammenführen der Flasche 2 und der Schraubeinheit 10, sei es, daß die Flasche gegen den Schraubkopf bewegt wird oder daß die Schraubeinheit 10 abgesenkt wird, wird der Antriebsmotor 16 eingeschaltet. Beim Drehen des Schraubkopfes 11 faßt der Schraubverschluß 1 am Gewindehals der festgehaltenen Flasche 2 und erreicht bereits nach einer oder wenigen Umdrehungen den Setzpunkt, das ist, wenn die Dichtung des Schraubverschlusses am Flaschenöffnungsrand zur Anlage kommt. Bis zum Erreichen dieses Setzpunktes hat der Antriebsmotor 16 ein relativ geringes Drehmoment aufzubringen und nimmt entsprechend einen relativ geringen Strom auf. Da Behälter-Schraubverschlüsse in der Regel ein Steilgewinde und wenig Kompression haben, ist die Zeitdauer vom Ansetzen des Schraubverschlusses bis zum Festziehen sowie der dazu notwendige Drehwinkel sehr klein (« harter Schraubfall »). Mit Erreichen des Endanzugsmoments wird die Drehbewegung des Schraubkopfes 12 und der Spindel 18 angehalten, wobei jedoch aufgrund des als nachgiebige Torsionskupplung wirkenden Rohrstücks 32 die sich drehenden Massen des Antriebsmotors 16 und seines Getriebes noch weiter drehen können. Da jedoch bei Erreichen des Endanzugsmoments die Stromzufuhr zum Antriebsmotor 16 abgeschaltet wird, kommen auch diese Massen bald zum Stillstand. Die beim Abbremsen dieser Massen in dem elastischen Rohrstück 32 aus Elastomer gespeicherte Energie bewirkt darauf eine Rückwärtsdrehung dieser Massen. Um zu verhindern, daß bei dieser Rückwärtsdrehung der auf der Flasche 2 festgeschraubte Schraubverschluß 1 wieder gelockert wird, sperrt das Rücklaufsperre-Wälzlager 23 die Spindel 18 und den Schraubkopf 11 in dieser Drehrichtung. Durch die Anordnung einer weichen Torsionskupplung und eines Freilaufs in der Schraubeinheit 10 wird der sonst « harte Schraubfall » in einen « weichen Schraubfall » umgewandelt.

Ergänzend wird bemerkt, daß als Torsionskupplung nicht nur ein nachgiebiges Rohrstück angeordnet werden kann, sondern daß auch andere Arten von Torsionsfedern bei entsprechender Anpassung verwendbar sind, wie z. B. nachgiebige Stäbe oder auch Schraubenfedern aus Stahl.

**Patentansprüche**

1. Vorrichtung zum Anbringen eines Schraubverschlusses (1) an einem Behälter (2) mit einem den Schraubverschluß aufnehmenden, drehbaren Schraubkopf (11) und einem Antriebsmotor (16), der über eine Kupplung mit dem Schraubkopf verbunden ist, dadurch gekennzeichnet, daß die Kupplung eine nachgiebige Torsionskupplung (17) ist, und daß dem Schraubkopf (11) eine Rücklaufsperre (23) zugeordnet ist.

2. Vorrichtung nach Anspruch 1, dadurch gekennzeichnet, daß die Torsionskupplung aus einer zwischen dem Antriebsmotor (16) und dem Schraubkopf (11) angeordneten Torsionsfeder (17) besteht.

3. Vorrichtung nach Anspruch 2, dadurch gekennzeichnet, daß die Torsionsfeder (17) aus einem nachgiebigen Elastomeren besteht.

4. Vorrichtung nach Anspruch 3, dadurch gekennzeichnet, daß die Torsionsfeder die Form eines an seinen beiden Enden eingespannten Drehkörpers (32) hat.

5. Vorrichtung nach Anspruch 4, dadurch gekennzeichnet, daß der Drehkörper ein Rohr (32) ist.

6. Vorrichtung nach Anspruch 5, dadurch gekennzeichnet, daß das Rohr (32) mit seinen Ende auf je einem konischen Zapfen (35, 38) sitzt und mit je einer konischen Hülse (36, 39) festgespannt ist.

7. Vorrichtung nach einem der Ansprüche 3 bis 6, dadurch gekennzeichnet, daß die Torsionsfeder (17) aus Polyurethan besteht.

**Claims**

1. Device for applying a screw closure (1) onto a container (2) with a rotatable screw head (11), receiving the screw closure, and a drive motor (16) which is connected via a coupling to the screw head, characterized in that the coupling is a compliant torsion coupling (17), and in that a non-reversing ratchet (23) is assigned to the screw head (11).

2. Device according to Claim 1, characterized in that the torsion coupling consists of a torsion spring (17) arranged between the drive motor (16) and the screw head (11).

3. Device according to Claim 2, characterized in that the torsion spring (17) consists of a compliant elastomer.

4. Device according to Claim 3, characterized in that the torsion spring has the form of a rotary body (32) clamped at both its ends.

5. Device according to Claim 4, characterized in that the rotary body is a tube (32).

6. Device according to Claim 5, characterized in that the tube (32) is seated with its end in each case on a conical pin (35, 38) and is clamped in each case with a conical sleeve (36, 39).

7. Device according to one of Claims 3 to 6, characterized in that the torsion spring (17) consists of polyurethane.

**Revendications**

1. Dispositif pour appliquer un bouchon de vissage (1) sur un récipient (2), avec une tête de vissage (11) tournante recevant le bouchon de vissage et un moteur d'entraînement (16), qui est relié à la tête de vissage par un accouplement, caractérisé en ce que l'accouplement est un accouplement de torsion élastique (17) et en ce qu'un blocage en retour (23) est affecté à la tête de vissage (11).

2. Dispositif selon la revendication 1, caractérisé en ce que l'accouplement de torsion se compose d'un ressort de torsion (17) disposé entre le moteur d'entraînement (6) et la tête de vissage (1).

3. Dispositif selon la revendication 2, caractérisé en ce que le ressort de torsion (17) est en un élastomère élastique.

4. Dispositif selon la revendication 3, caractérisé en ce que le ressort de torsion possède la forme d'un corps de rotation (32) serré à ses deux extrémités.

5. Dispositif selon la revendication 4, caractérisé en ce que le corps de rotation est un tube (32).

6. Dispositif selon la revendication 5, caractérisé en ce que le tube (32) repose avec chacune de ses extrémités sur un tourillon conique (35, 38) et que chacune est serrée dans une douille conique (36, 39).

7. Dispositif selon l'une des revendications 3 à 6, caractérisé en ce que le ressort de torsion (17) est en polyuréthane.